# EUROPEAN PATENT APPLICATION

(11) **EP 2 667 480 A1**
(43) Date of publication of application: **27.11.2013**
(21) Application number: 12737107.8
(22) Date of filing: 18.01.2012
(51) Int. Cl.: H02J 7/02, B60L 11/18, H01M 10/46, H01M 10/48, H02J 7/00

(54) **CHARGE CONTROL APPARATUS, CHARGE CONTROL METHOD, AND PROGRAM**

(30) Priority: 21.01.2011 JP 2011011346
(71) Applicant: NEC Corporation, Tokyo 108-8001 (JP)
(72) Inventor: ISHII, Kenichi, Tokyo 108-8001 (JP)
(74) Representative: Sieckmann, Dirk Christoph
(86) International application number: PCT/JP2012/050951
(87) International publication number: WO 2012/099160

(57) **Abstract**

A charging control device 10 that controls charging of a plurality of electric automobiles 208, 209, 210 includes: a charging determination unit 305 that determines whether or not a state of charge of the electric automobile 208, 209, 210 connected via a contactor 202, 203, 204 satisfies a predetermined condition, determines that the electric automobile is to be charged when the condition is satisfied, and determines that charging of the electric automobile is to be interrupted in order to charge another electric automobile when the condition is not satisfied; and a contactor control unit 302 that controls the contactor 202, 203, 204 on the basis of the determination of the charging determination unit 305.

## Description

### BACKGROUND

The present invention relates to a charging control device, a charging control method, and a program for an electric automobile.

In recent years, electric automobiles (EVs) have grown in popularity, and it is therefore foreseeable that in the future, cases may arise in which a large number of EVs are charged using a limited number of chargers. The simplest charging method in such a case is to charge the EVs one at a time, terminate charging when the EV is fully charged or charged to a predetermined termination charging capacity, then start to charge the next EV, and so on, repeatedly. With this method, however, charging is not started on the EV coming later in a charging queue until all of the EVs coming earlier in the charging queue have been fully charged, and therefore this EV must wait for a long time.

Patent Document 1 discloses a vehicle power supply system including a plurality of batteries and a power generator that generates electric energy used to charge the plurality of batteries, wherein the system includes: calculation means for calculating a charging acceptance property of each battery on the basis of a detected value of a current flowing to each battery; and selective charging means for selecting a battery to be charged preferentially from among the plurality of batteries on the basis of the respective calculated charge acceptance properties, and preferentially charges the selected battery.

Patent Document 1: Patent Publication JP-A-2004-222473

With the device described in Patent Document 1, however, the plurality of batteries are polarized into fully charged batteries that have been charged preferentially and batteries that have not been charged at all.

### SUMMARY

It is therefore an exemplary object of the present invention to provide a charging control method with which variation among electric automobiles in a state of charge thereof can be suppressed.

A charging control device according to the present invention controls charging of a plurality of electric automobiles, and includes: a charging determination unit that determines whether or not a state of charge of an electric automobile connected via a contactor satisfies a predetermined condition, determines that the electric automobile is to be charged when the condition is satisfied, and determines that charging of the electric automobile is to be interrupted in order to charge another electric automobile when the condition is not satisfied; and a contactor control unit that controls the contactor on the basis of the determination of the charging determination unit.

According to an exemplary aspect of the present invention, charging can be performed such that variation among electric automobiles in a remaining charge of a rechargeable battery is suppressed.

### DESCRIPTION OF THE DRAWINGS

Fig. 1 is a block diagram showing a configuration of a charging system including a charging control device according to an embodiment of the present invention;
Fig. 2 is a block diagram showing a configuration of the charging control device according to this embodiment of the present invention;
Fig. 3 is a flowchart of an operation performed by a charging determination unit when an electric automobile is connected to the charging system, according to this embodiment of the present invention;
Fig. 4 is a flowchart of an operation performed by the charging determination unit when the electric automobile is disconnected from the charging system, according to this embodiment of the present invention;
Fig. 5 is an example of a flowchart of charging control processing executed by the charging determination unit according to this embodiment of the present invention;
Fig. 6 is a view showing a charging characteristic of a lithium ion battery; and
Fig. 7 is a view illustrating effects of the present invention.

### EXEMPLARY EMBODIMENT

Next, an exemplary embodiment of the present invention will be described in detail with reference to the drawings.

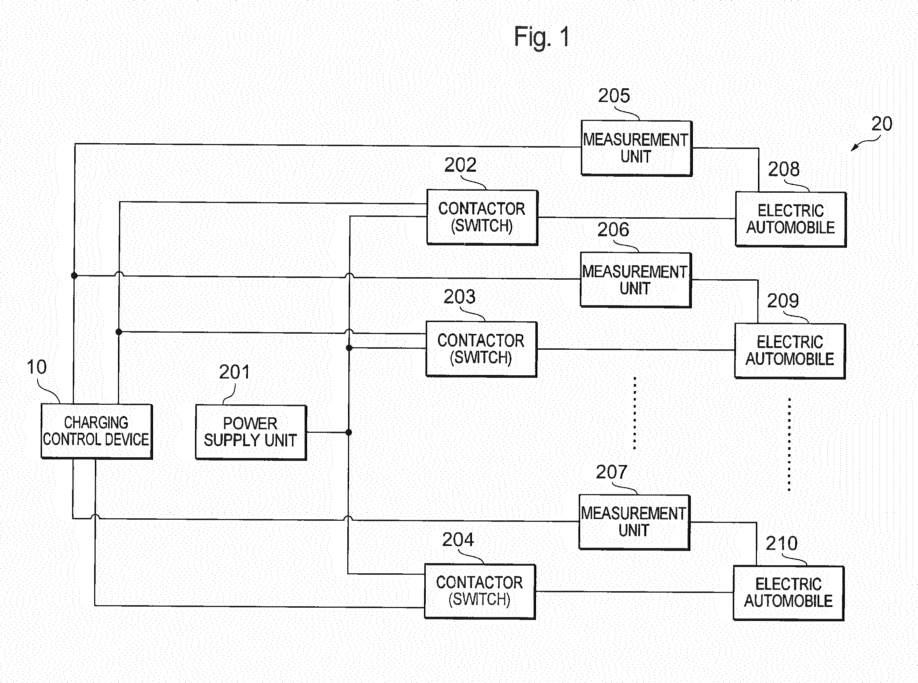

Fig. 1 is a block diagram showing a configuration of a charging system 20 including a charging control device 10 according to an embodiment of the present invention. As shown in the drawing, the charging system 20 includes the charging control device 10, a power supply unit 201, contactors 202, 203, 204, and measurement units 205, 206, 207.

The power supply unit 201 is connected to electric automobiles 208, 209, 210 via the contactors 202, 203, 204, which are constituted by switches, in order to charge the electric automobiles 208, 209, 210 by supplying power thereto. The measurement units 205, 206, 207 are associated respectively with the contactors 202, 203, 204 in order to measure respective states of charge of the electric automobiles 208, 209, 210 connected to the contactors.

Possible methods of measuring the state of charge include a method of measuring a battery charge, a charging voltage, or a charging current by connecting the measurement unit to the electric automobile, and a method of measuring the charging voltage or the charging current by connecting the measurement unit to front and rear cables of the contactor. The measurement unit also detects whether or not the electric automobile is connected to the contactor.

The charging control device 10 controls charging of the respective electric automobiles 208, 209, 210 by controlling the respective contactors 202, 203, 204 on the basis of the states of charge measured by the measurement units 205, 206, 207.

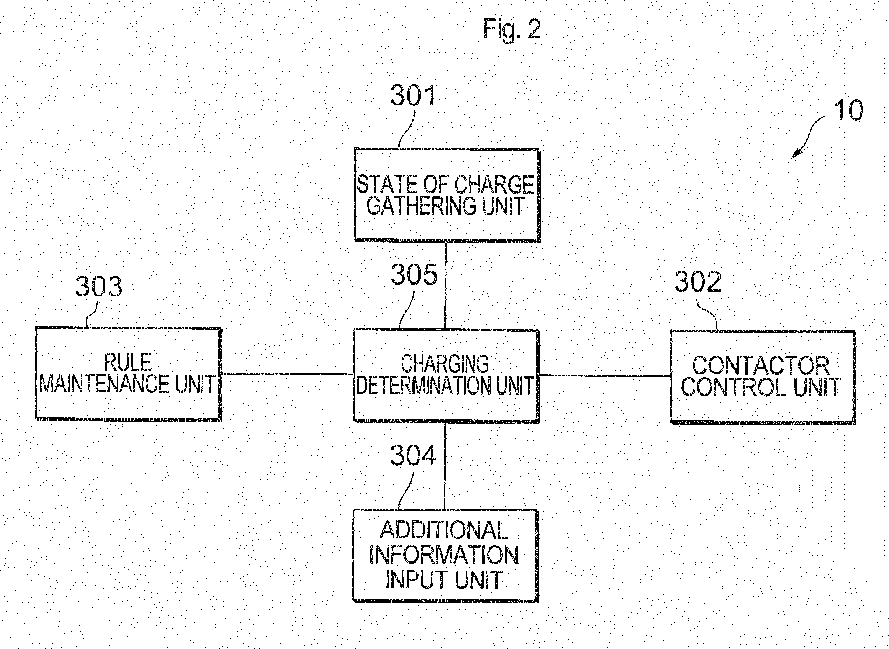

Fig. 2 is a block diagram showing a configuration of the charging control device 10. As shown in the drawing, the charging control device 10 includes a state of charge gathering unit 301, a contactor control unit 302, a rule maintenance unit 303, an additional information input unit 304, and a charging determination unit 305.

The state of charge gathering unit 301 gathers the states of charge of the respective electric automobiles 208, 209, 210, measured by the measurement units 205, 206, 207, and connection conditions of the electric automobiles 208, 209, 210 to the respective contactors 202, 203, 204.

The contactor control unit 302 controls the contactors 202, 203, 204.
The rule maintenance unit 303 maintains rules of the charging control performed by the charging control device 10. The rules maintained by the rule maintenance unit 303 may be modified from the outside of the charging control device 10. The rules may also be updated internally in accordance with control results obtained by the charging control device 10.

The additional information input unit 304 is used in a case where the contactors 202, 203, 204 are controlled using information other than the states of charge of the respective electric automobiles 208, 209, 210 to maintain or externally input the information other than the states of charge. The information other than the states of charge may be information indicating a vehicle type of each electric automobile, information relating to a battery capacity, and information such as a departure time of the electric automobile. The additional information input unit 304 may also be used to input information indicating connection and disconnection of an electric automobile to and from the system via a manual operation performed by a user or a manager, or through detection using a sensor or the like.

Using the information gathered by the state of charge gathering unit 301 and the information from the additional information input unit 304, the charging determination unit 305 determines, on the basis of the rules maintained by the rule maintenance unit 303, whether or not to control the contactors (i.e. switch the contactors ON or OFF), and transmits a control instruction for each contactor to the contactor control unit 302.

Note that conventional technology may be applied to configurations of the charging system 20 other than the charging control device 10, and therefore detailed description of these configurations has been omitted. The electric automobiles 208, 209, 210 may be electric automobiles that run on electricity alone, or hybrid electric automobiles that operate using both electricity and gasoline.

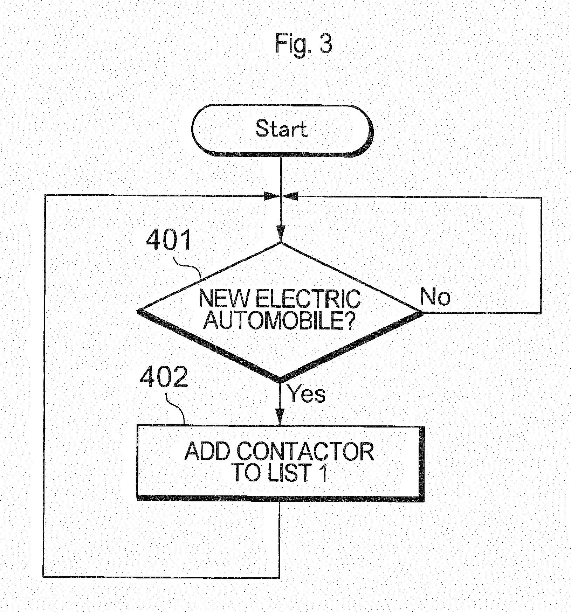

Fig. 3 is a flowchart of an operation performed by the charging determination unit 305 when an electric automobile 208, 209, 210 is connected to the charging system 20.

The charging determination unit 305, after detecting via the state of charge gathering unit 301 or the additional information input unit 304 that an electric automobile has been connected to the system (Step 401: Yes), adds an identifier of the contactor to which the electric automobile has been connected to a first charging list (Step 402).

Here, the first charging list is a table held by the charging determination unit 305, which includes a list of identifiers of contactors to which electric automobiles that have not yet started charging are connected. In addition to the identifiers of the contactors, the first charging list may hold connection times of the electric automobiles, information relating to the users of the electric automobiles, and so on.

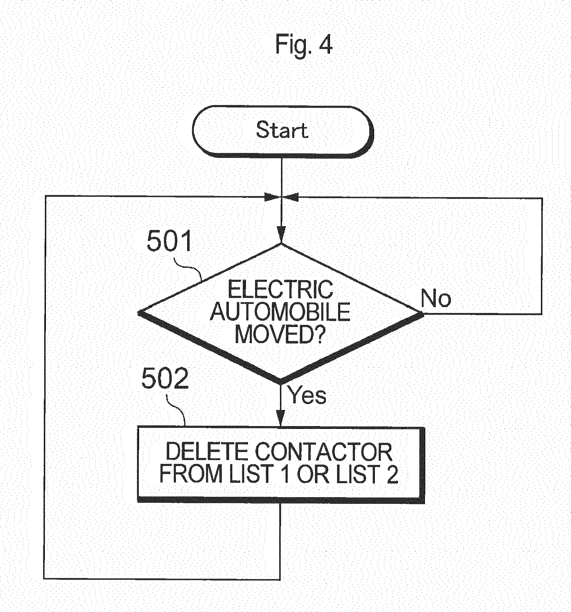

Fig. 4 is a flowchart of an operation performed by the charging determination unit 305 when an electric automobile 208, 209, 210 is disconnected from the charging system 20.

The charging determination unit 305, after detecting via the state of charge gathering unit 301 or the additional information input unit 304 that an electric automobile has been disconnected from the system (Step 501: Yes), retrieves the first charging list and a second charging list, and deletes the identifier of the contactor to which the electric automobile was connected (Step 502). Here, the second charging list is a table held by the charging determination unit 305, which includes a list of identifiers of contactors to which electric automobiles that have satisfied a certain state of charge condition are connected. In addition to the identifiers of the contactors, the second charging list may hold the connection times of the electric automobiles, information relating to the users of the electric automobiles, and so on.

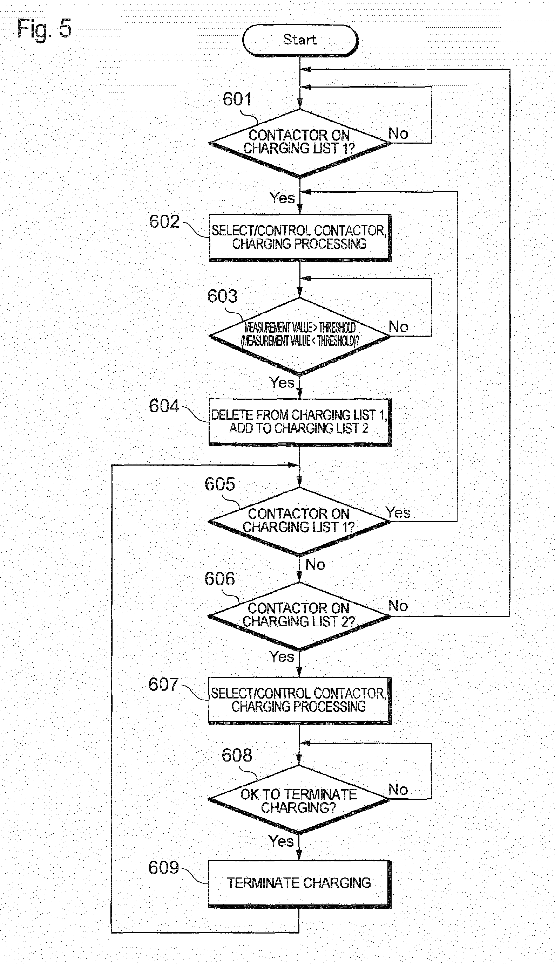

Fig. 5 is an example of a flowchart of charging control processing executed by the charging determination unit 305. The charging determination unit 305 waits for a contactor to be added to the first charging list (Step 601). In other words, the charging determination unit 305 waits for an electric automobile to be connected to the charging system 20.

When a contactor is added to the first charging list (Step 601: Yes), the contactor on the first charging list is selected, and an instruction is issued to the contactor control unit 302 to control the selected contactor in order to start charging (Step 602). Note that when a plurality of contactors are registered on the first charging list, a single contactor is selected and controlled. Possible selection methods include a method of preferentially selecting the contactor having the earliest connection time to the charging system 20, a method of preferentially selecting a user who has paid the highest fee on the basis of the user information, and so on.

When charging starts, the charging determination unit 305 measures the state of charge of the electric automobile connected to the contactor performing charging via the state of charge gathering unit 301 and the measurement units 205, 206, 207, and performs monitoring to determine whether or not a measurement value has risen above or fallen below a predetermined threshold (Step 603).

Here, whether monitoring is performed to determine that the state of charge has risen above or fallen below the threshold depends on the value measured as the state of charge. In this embodiment, for example, a charging capacity (a battery charge) is measured as the state of charge. When the charging capacity is measured as the state of charge, monitoring is performed to determine whether or not the measurement value has risen above the predetermined threshold.

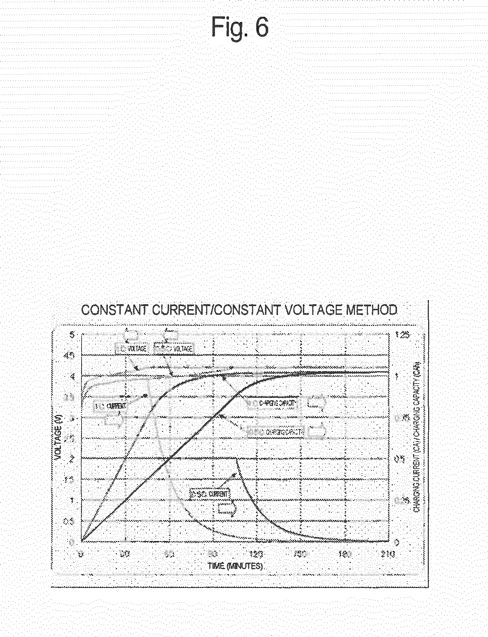

Fig. 6 is a view showing a charging characteristic of a lithium ion battery (LiB). Fig. 6 shows variation in a "charging current", a "voltage", and a "charging capacity" when a constant current/constant voltage charging method, which is a typical LiB charging method, is used. As is evident from the drawing, in the constant current/constant voltage charging method, charging is performed at a constant current value while the charging capacity remains small. Then, when the voltage reaches a certain value, the current value is gradually reduced so that charging is performed at a constant voltage. This method is employed to protect a rechargeable battery from an excessive voltage increase.

As is evident from the graph of the charging capacity in Fig. 6, at the start of charging, a charge amount increases steadily, but from a midway point, an increase speed thereof decreases. Hence, an amount of time required to charge an approximately identical charge amount is different immediately after the start of charging and immediately before the end of charging, and therefore a charging efficiency deteriorates as the charging capacity increases. Note that the charging capacity at which the increase speed starts to decrease also depends on the charging current value such that when charging is performed at a large current, the increase speed starts to decrease at a smaller charging capacity.

Meanwhile, taking into consideration user satisfaction with regard to the charging capacity and the charging time, if an EV having a 60% charging capacity takes ten minutes to reach 80% but an EV at 80% takes thirty minutes to reach 100%, a degree of user satisfaction is likely to differ greatly even though the charge amount increases by 20% in both cases. Further, although the charge amount increase is 20% in both cases, if a relative ratio between pre-charging and post-charging charge amounts is taken into account, the degree of user satisfaction is likely to be higher when the charging capacity is increased from 60% to 80%.

In this embodiment, a charging capacity threshold is set in advance, and monitoring is performed to determine whether or not the battery charge has exceeded the threshold. When the charging capacity threshold is set at 75%, for example, a battery charge of 50% is determined to be below the threshold and a battery charge of 90% is determined to be above the threshold.

Note that the charging current and the charging voltage may also be measured as the state of charge. When the charging current is measured, the charging current decreases steadily as charging progresses, and therefore monitoring is performed to determine whether or not the charging current has fallen below the predetermined threshold. Further, when the charging voltage is measured, monitoring is performed to determine whether or not the charging voltage has risen above the predetermined threshold. Furthermore, time may be included in the measurement value monitoring operation. For example, when the charging voltage is measured, the charging voltage becomes constant as charging progresses, and therefore the state of charge may be determined on the basis of an elapsed time following a point at which the charging voltage rises above the threshold.

Having determined that the state of charge of the electric automobile undergoing charging has reached a predetermined condition (i.e. has risen above or fallen below the threshold) (Step 603: Yes), the charging determination unit 305 issues an instruction to the contactor control unit 302 to interrupt charging, and then deletes the contactor performing the charging from the first charging list and adds the contactor to the second charging list (Step 604).

Next, the charging determination unit 305 checks whether or not a contactor is still registered on the first charging list, and when a contactor is still registered (Step 605: Yes), advances to Step 602.

When a contactor is not registered on the first charging list (Step 605: No), the charging determination unit 305 checks whether or not a contactor is registered on the second charging list, and when a contactor is registered on the second charging list (Step 606: Yes), the charging determination unit 305 selects the contactor from the second charging list and issues an instruction to the contactor control unit 302 to control the selected contactor in order to start charging (Step 607).

Note that when a plurality of contactors are registered on the second charging list, a single contactor is selected and controlled. Possible selection methods include a method of preferentially selecting the contactor having the earliest connection time to the charging system 20, a method of preferentially selecting a user who has paid the highest fee on the basis of the user information, and so on.

After determining that the state of charge of the electric automobile undergoing charging has reached a condition in which the charging may be terminated (Step 608: Yes), the charging determination unit 305 issues an instruction to the contactor control unit 302 to terminate the charging (Step 609). The charging determination unit 305 then returns to Step 605, and repeats the charging processing until no contactors are registered on the first charging list and the second charging list.

Note that in this embodiment, a case in which the charging system 20 can only charge one electric automobile at a time was described as an example, but the present invention may also be applied to a system capable of charging a plurality of electric automobiles simultaneously. In this case, however, it is assumed that the number of electric automobiles that can be charged simultaneously by the system is smaller than a maximum number of electric automobiles that can be connected to the system simultaneously.

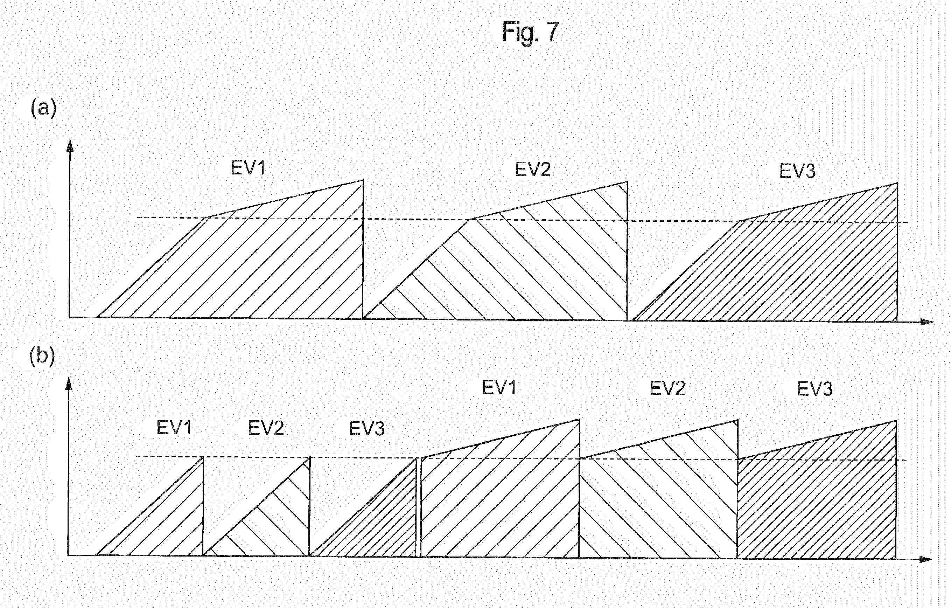

According to this embodiment, as described above, charging can be performed such that variation among electric automobiles in a remaining charge of a rechargeable battery is suppressed. The reason for this will now be described using Fig. 7. Fig. 7A is a view illustrating charging processing performed by a charging control device according to a comparative example, and Fig. 7B is a view illustrating the charging processing performed by the charging control device according to the present invention. In Figs. 7A and 7B, respective battery charges of three electric automobiles subjected to charging, namely EVs 1, 2, and 3, are schematically shown. The abscissa shows time.

In Fig. 7A, the EVs 1, 2, 3 are charged in that order such that when the EV undergoing charging reaches a condition in which the charging may be terminated, charging of the next EV begins. As is evident from the drawings, when the battery charge approaches a charging termination level, the increase speed of the battery charge decreases.

In Fig. 7B, when the battery charges of the respective EVs exceed the predetermined threshold, which is indicated by a dotted line, the contactor to which the EV is connected is shifted to the second charging list. Hence, when the present invention is applied, the charging time required for the battery charges of the three EVs to reach the predetermined threshold can be shortened.

Further, according to this embodiment, charging is performed preferentially on an EV having a high battery charge increase speed relative to the charging time, and therefore an overall reduction in the time required to increase the battery charge can be achieved. As a result, user satisfaction can be improved.

This application claims priority based on Japanese Patent Application No. 2011-11346, filed on January 21, 2011, the entire contents of which are incorporated herein.

The present invention was described above with reference to embodiments thereof, but the present invention is not limited to the above embodiments, and various modifications that can be understood by a person skilled in the art may be implemented in relation to the configurations and details of the present invention within the scope of the present invention.

All or a part of the embodiments described above may be described as in the following notes, but the embodiments are not limited thereto.

### (Note 1)

A charging control device that controls charging of a plurality of electric automobiles, including:
a charging determination unit that determines whether or not a state of charge of an electric automobile connected via a contactor satisfies a predetermined condition, determines that the electric automobile is to be charged when the condition is satisfied, and determines that charging of the electric automobile is to be interrupted in order to charge another electric automobile when the condition is not satisfied; and
a contactor control unit that controls the contactor on the basis of the determination of the charging determination unit.

### (Note 2)

The charging control device according to note 1, wherein the state of charge is a remaining charge of a rechargeable battery of the electric automobile, and
the condition is satisfied when the remaining charge is equal to or smaller than a predetermined threshold.

### (Note 3)

The charging control device according to note 1, wherein the state of charge is a current value during charging of the electric automobile, and
the condition is satisfied when the current value is equal to or larger than a predetermined threshold.

### (Note 4)

The charging control device according to note 1, wherein the state of charge is a voltage value during charging of the electric automobile, and
the condition is satisfied when the voltage value is equal to or smaller than a predetermined threshold.

### (Note 5)

A charging control method for controlling charging of a plurality of electric automobiles, including the steps of:
determining whether or not a state of charge of an electric automobile connected via a contactor satisfies a predetermined condition, determining that the electric automobile is to be charged when the condition is satisfied, and determining that charging of the electric automobile is to be interrupted in order to charge another electric automobile when the condition is not satisfied; and
controlling the contactor on the basis of the determination.

### (Note 6)

A program that causes a computer to function as a charging control device that controls charging of a plurality of electric automobiles, the program causing the computer to function as:
a charging determination unit that determines whether or not a state of charge of an electric automobile connected via a contactor satisfies a predetermined condition, determines that the electric automobile is to be charged when the condition is satisfied, and determines that charging of the electric automobile is to be interrupted in order to charge another electric automobile when the condition is not satisfied; and
a contactor control unit that controls the contactor on the basis of the determination of the charging determination unit.

The present invention is suitable for performing charging such that variation among electric automobiles in a remaining charge of a rechargeable battery is suppressed.

- 10: charging control device
- 20: charging system
- 201: power supply unit
- 202, 203, 204: contactor
- 205, 206, 207: measurement unit
- 208, 209, 210: electric automobile
- 301: state of charge gathering unit
- 302: contactor control unit
- 303: rule maintenance unit
- 304: additional information input unit
- 305: charging determination unit

## Claims

1. A charging control device that controls charging of a plurality of electric automobiles, comprising:
a charging determination unit that determines whether or not a state of charge of an electric automobile connected via a contactor satisfies a predetermined condition, determines that the electric automobile is to be charged when the condition is satisfied, and determines that charging of the electric automobile is to be interrupted in order to charge another electric automobile when the condition is not satisfied; and
a contactor control unit that controls the contactor on the basis of the determination of the charging determination unit.

2. The charging control device according to claim 1, wherein the state of charge is a remaining charge of a rechargeable battery of the electric automobile, and
the condition is satisfied when the remaining charge is equal to or smaller than a predetermined threshold.

3. The charging control device according to claim 1, wherein the state of charge is a current value during charging of the electric automobile, and
the condition is satisfied when the current value is equal to or larger than a predetermined threshold.

4. The charging control device according to claim 1, wherein the state of charge is a voltage value during charging of the electric automobile, and
the condition is satisfied when the voltage value is equal to or smaller than a predetermined threshold.

5. A charging control method for controlling charging of a plurality of electric automobiles, comprising the steps of:
determining whether or not a state of charge of an electric automobile connected via a contactor satisfies a predetermined condition, determining that the electric automobile is to be charged when the condition is satisfied, and determining that charging of the electric automobile is to be interrupted in order to charge another electric automobile when the condition is not satisfied; and
controlling the contactor on the basis of the determination.

6. A program that causes a computer to function as a charging control device that controls charging of a plurality of electric automobiles, the program causing the computer to function as:
a charging determination unit that determines whether or not a state of charge of an electric automobile connected via a contactor satisfies a predetermined condition, determines that the electric automobile is to be charged when the condition is satisfied, and determines that charging of the electric automobile is to be interrupted in order to charge another electric automobile when the condition is not satisfied; and
a contactor control unit that controls the contactor on the basis of the determination of the charging determination unit.
